Europäisches Patentamt

(19) European Patent Office

Office européen des brevets

(11) Publication number: **0 286 641 B1**

(12) **EUROPEAN PATENT SPECIFICATION**

(45) Date of publication of patent specification:
02.05.91 Bulletin 91/18

(51) Int. Cl.⁵: **B62D 55/125**

(21) Application number: **87900572.6**

(22) Date of filing: **22.12.86**

(86) International application number:
**PCT/US86/02754**

(87) International publication number:
**WO 88/03105 05.05.88 Gazette 88/10**

(54) **FINAL DRIVE MECHANISM FOR A VEHICLE.**

(30) Priority: **23.10.86 US 922437**

(43) Date of publication of application:
**19.10.88 Bulletin 88/42**

(45) Publication of the grant of the patent:
**02.05.91 Bulletin 91/18**

(84) Designated Contracting States:
**BE DE FR GB**

(56) References cited:
**DE-A- 1 755 168
DE-C- 389 541
GB-A- 2 062 558
US-A- 3 885 642**

(73) Proprietor: **CATERPILLAR INC.
100 Northeast Adams Street
Peoria Illinois 61629-6490 (US)**

(72) Inventor: **STEVENS, Samuel, B.
405 Fairlane
Pekin, IL 61554 (US)**
Inventor: **BECKER, Danny, J.
10231 N. Spring Lane
Peoria, IL 61615 (US)**

(74) Representative: **Wagner, Karl H.
WAGNER & GEYER Patentanwälte
Gewürzmühlstrasse 5 Postfach 246
W-8000 München 22 (DE)**

## Description

### Technical Field

This invention relates to a final drive mechanism for a vehicle, and more particularly to the structure of a wheel assembly and the final drive mechanism for supporting and driving it.

### Background Art

Many track driven excavators use a fluid motor for powerably rotating the track chain driving sprocket through a speed reducing final drive assembly. The rear drive sprocket, front idler, and a plurality of supporting rollers are mounted on a longitudinally extending track roller frame, and a case extends laterally inwardly from the track roller frame to contain a final drive gear train and to support the fluid motor for powering the gear train. U.S. Patents No. 3,872,939 and 3,960,230 as well as DE-A-1 755 168 (corresponding to the precharacterising part of claim 1) illustrate such excavator final drive mechanisms

In order to avoid the disadvantages associated with conventional multi-jointed and metallic track chains for vehicles of the aforementioned excavator type an increasing amount of interest has developed for employing a continuous elastomeric or rubber belt entrained about a pair of longitudinally spaces wheels for propulsion and support. The generally cylindrical driving wheel that is required to give proper support for, and sufficient area of contact with, the belt is substantially wider than the usual sprocket so that it is no longer convenient and simple to reach around the wheel or to reach in from one side in a cantilevered manner to provide the desired bearing support therefor. Moreover, the final drive housing containing the reduction gear train driven by the hydraulic motor must be constructed to provide the necessary clearances from the wheel and the belt so that the width of the final drive mechanism becomes excessive. Still further, there is the need for transferring relatively high belt tension loads from the wheel support bearings and through the final drive housing to the track roller frame.

Accordingly, what is needed is a simple and yet reliable final drive mechanism for rotatably supporting and powerably driving a relatively wide wheel assembly, engaged by an endless belt, and which is compactly contained primarily within the space envelope of the belt. Preferably, the final drive mechanism should not add excessive width to the wheel assembly and should transfer belt loads from the wheel support bearings in a generally symmetrical manner with respect to the longitudinal midplane of the wheel assembly. By avoiding the relatively uneven deflection of the usual cantilevered final drive housing, the size and weight of the final drive mechanism can be minimized.

And still further, the final drive mechanism should provide a compact gear train having a plurality of speed reduction stages for effectively driving the wheel assembly at the desired reduced speed with respect to the driven input member.

The present invention is directed to overcoming one or more of the problems as set forth above.

### Disclosure of the Invention

In accordance with one aspect of the present invention, a final drive mechanism as set forth in the preamble of claim 1 comprises the features of the characterizing portion of claim 1. Preferred embodiments of the invention are disclosed in the dependent claims.

In accordance with another aspect of the present invention, a final drive mechanism includes a wheel assembly having axially inner and outer side portions and defining a substantially cylindrical envelope and a relatively narrow annular gap between the side portions, hollow frame means extending solely radially inwardly between the side portions through the gap for rotatably supporting the wheel assembly, and gear train means including a plurality of interconnected gears defining two speed reduction gear sets mounted within the hollow frame means and located within the envelope for driving the wheel assembly.

In accordance with a still further aspect of the invention, a final drive mechanism is provided for a vehicle having first and second wheel assemblies and a drive belt entrained about the wheel assemblies. The first wheel assembly has inner and outer side portions and means for releasably connecting the side portions together and defining an annular peripheral gap between them. Hollow frame means extend generally radially inwardly through the gap and rotatably supports the first wheel assembly laterally away from the central longitudinal plane of the vehicle. The hollow frame means includes inner and outer bearing assemblies for transferring forces from the drive belt upon the side portions of the first wheel assembly to the hollow frame means. The final drive mechanism also includes a gear train for driving the first wheel assembly which passes radially inwardly through the gap within the hollow frame and includes a plurality of gears within the first wheel assembly.

Preferably, the gear train for driving the first wheel assembly includes a first cluster gear, a second cluster gear driven by the first cluster gear and defining a sun gear, and a planetary gear set including a ring gear nonrotatably connected to the hollow frame, a planet carrier connected for joint rotation with the wheel assembly and a plurality of planet gears mounted on the carrier which intermesh with the ring gear and are driven by the sun gear of the second cluster gear. The first cluster gear has a large diameter gear thereof which is substantially located on the mid longitudinal plane of the wheel assembly and which is driven by a hydraulic motor through one or more gears arranged on the plane and located exteriorly of the envelope of the wheel assembly.

## Brief Description of the Drawings

Fig. 1 is a fragmentary, diagrammatic side elevational view of an earthmoving excavator employing the final drive mechanism of the present invention.

Fig. 2 is a diagrammatic top plan view of the undercarriage portion of the excavator of Fig. 1 taken along line II-II thereof.

Fig. 3 is a developed, diagrammatic and enlarged sectional view of the final drive mechanism of Fig. 1 taken along line III-III thereof.

Fig. 4 is an enlarged cross sectional view of a portion of Fig. 3 to better show details of construction thereof.

Fig. 5 is a diagrammatic side elevational view of the final drive mechanism of the present invention at an enlarged scale from that shown in Fig. 1 to better illustrate the disposition of certain elements of the gear train.

Fig. 6 is a fragmentary and enlarged top plan view of the rear portion of the roller frame shown in Fig. 1 solely illustrating the construction of the supporting hollow frame in greater detail.

Fig. 7 is a fragmentary side elevational view of the hollow frame shown in Fig. 6.

## Description of the Preferred Embodiment

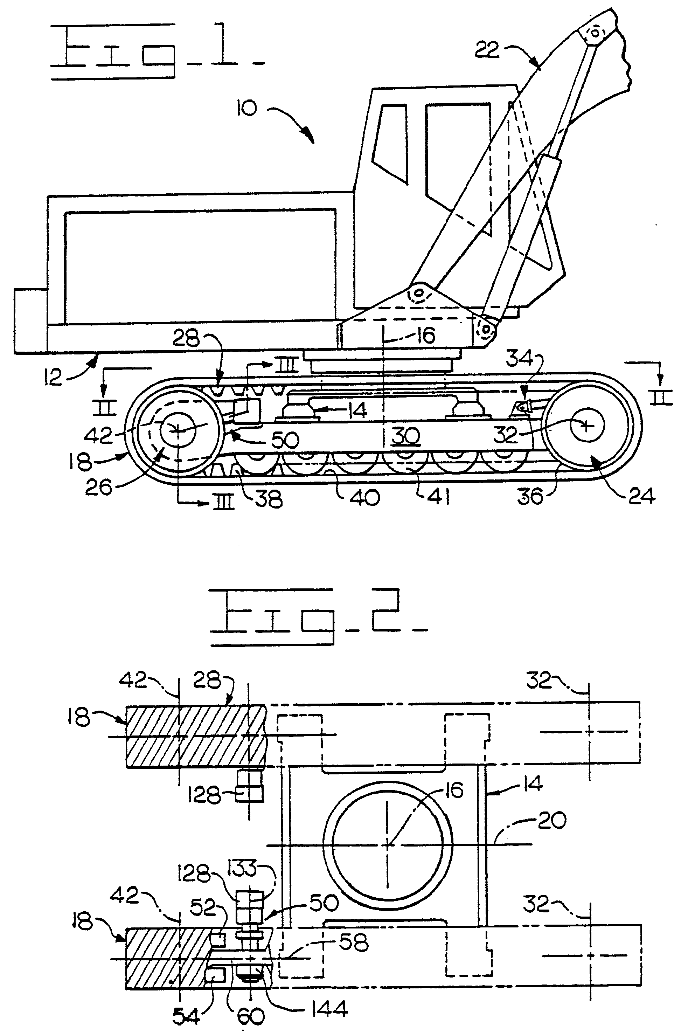

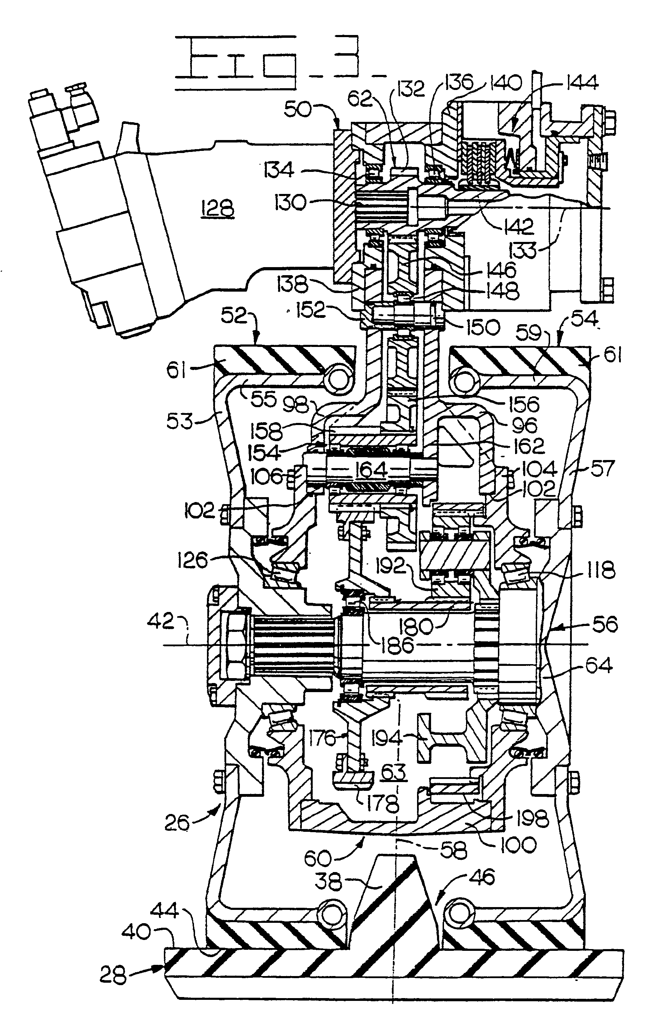

Figs. 1 and 2 illustrate a vehicle 10 such as an earthmoving excavator having a superstructure 12 mounted on a car body 14 for rotation about a vertical axis 16. In turn, the car body is supported on substantially parallel undercarriage assemblies 18 displaced laterally about the same distance from a central longitudinal plane 20 passing through the vertical axis. An implement 22, only a portion of which is shown, is adapted to move earth or to otherwise accomplish a work task in a well known manner.

Each of the undercarriage assemblies 18 includes a front idler wheel assembly 24, a rear drive wheel assembly 26 and an endless drive belt 28 entrained about the wheel assemblies. Preferably, the drive belt utilized is an appropriately internally reinforced elastomeric or rubber belt of the endless band type formed into a closed loop. The front idler wheel assembly 24 is mounted on a longitudinally extending roller frame 30 in such a way that it has a movable axis 32. Support and loading means 34, only partially illustrated in Fig. 1, is incorporated For continually urging the front idler wheel assembly longitudinally forwardly or to the right when viewing the drawings. Such loading means maintains a relatively high and constant tension level upon the drive belt 28 and controllably recoils or moves rearwardly for absorbing energy when an object finds its way between the belt and wheel assembly, or when the front of the belt contacts an external obstacle. The front idler wheel assembly has a relatively rigid and radially outwardly facing surface 36 of substantially cylindrical shape divided in two by a peripheral guide channel, not shown, for receiving a plurality of guide blocks 38 that extend inwardly from a relatively flat interior surface 40 of the belt.

The car body 14 of the excavator 10 is supported by the opposite roller frames 30, and the weight of the car body and superstructure 12 is transferred through a plurality of roller wheels 41 connected to the roller frame and through the drive belt 28 to the ground.

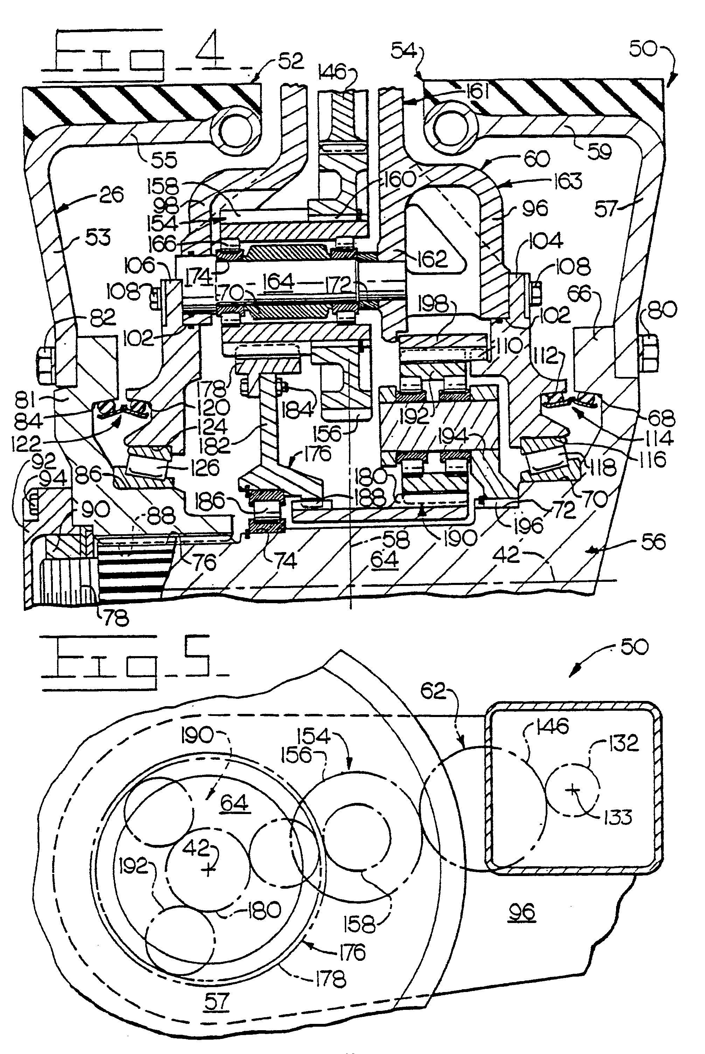

The rear drive wheel assembly 26 frictionally transmits power to the drive belt 28 and has a fixed horizontal and transverse axis 42. As is shown best in Fig. 3, the rear drive wheel assembly defines a relatively rigid and radially outwardly facing cylindrical surface or a substantially cylindrical envelope 44 significantly divided in two by a relatively narrow annular peripheral gap 46.

A final drive mechanism 50 constructed in accordance with the present invention includes firstly the rear drive wheel assembly 26. As shown best in Fig. 3, the rear drive wheel assembly defines an axially inner side portion 52, an axially outer side portion 54, and shaft means such as a shaft assembly 56 for releasably connecting the opposite side portions together and for defining the annular peripheral gap 46 between them radially outwardly of the shaft assembly. A vertical, longitudinally extending midplane 58 is located between the side portions substantially centrally of the annular gap. As is clearly illustrated, the inner side portion 52 defines a side wall 53 and a generally cylindrical flange 55 extending cantileverably therefrom, and the outer side portion 54 defines a side wall 57 and a similar flange 59 extending cantileverably therefrom and toward the other flange. Each of the peripherally disposed flanges preferably has a generally cylindrical band 61 of elastomeric or rubber material secured thereto that defines the substantially cylindrical envelope 44.

The final drive mechanism 50 secondly includes hollow frame means such as the hollow frame 60 illustrated in Fig. 3 for rotatably supporting the rear drive wheel assembly 26 laterally away from the central longitudinal plane 20 of the vehicle by extending solely radially inwardly through the relatively narrow annular peripheral gap 46. In the instant embodiment, the hollow frame 60 is a longitudinally extending and integrally cast part of the roller frame 30 and defines an enclosed compartment 63, although it can be appreciated that it could alternatively be fabricated or be releasably secured to the remainder of the roller frame without departing from the spirit of the present invention.

Thirdly, the final drive mechanism 50 includes a year train 62 arranged within the enclosed compartment of of the hollow frame 60 on or near the midplane 58 for powerably rotating the rear drive wheel assembly 26 through a torque transmitting path directed radially inwardly through the annular peripheral gap 46 toward the transverse axis 42.

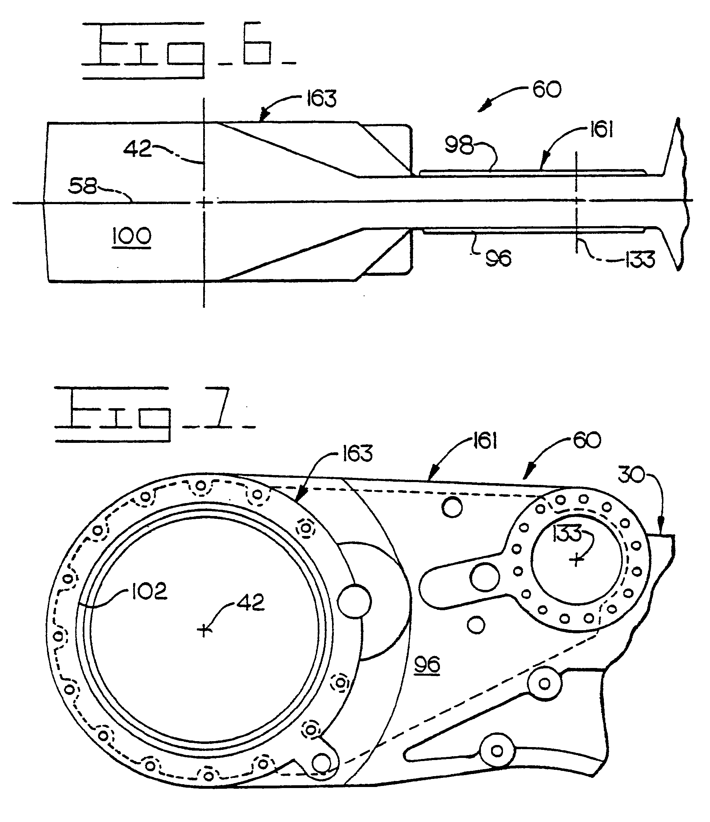

More particularly, as shown best in Fig. 4, the shaft assembly 56 of the rear drive wheel assembly 26 includes an axle shaft 64 defining an annular and radially outwardly extending flange portion 66, a radially inwardly facing tapered seal seat 68 within the annular flange portion, a cylindrical first bearing seat 70 and an external spline 72 at the outboard end thereof. A cylindrical second bearing seat 74 is defined at the inboard end of the shaft along with an external spline 76 and a threaded distal end 78. The outer side wall 57 of the wheel assembly is preferably releasably secured to the shaft flange portion 66 through a plurality of fasteners 80 screwthreadably received in the flange portion. An adapter or hub 81 is similarly releasably secured to the inner side wall 53 by fasteners 82, and this hub defines a radially inwardly facing tapered seal seat 84, a cylindrical third bearing seat 86, and an internal spline 88 adapted to intermesh with the external spline 76 on the axle shaft. An internally threaded nut 90 is received on the distal end 78 of the axle shaft, and a locking cover or cap 92 is releasably connected to the hub by a plurality of fasteners 94 so as to protect the nut and to restrain rotation thereof.

As shown in Figs. 3, 4, 6 and 7, hollow frame 60 includes a contoured outer side wall 96 and a contoured inner side wall 98 located generally symmetrically at either side of the mid-plane 58. These side walls are integrally connected together by a contoured peripheral wall 100. Each of the side walls defines a cylindrical bore 102 therethrough symmetrically arranged along the transverse central axis 42, and the hollow frame further includes an outside cover 104 and an inside cover 106 which are insertable in the bores and releasably secured to the respective side walls by a plurality of fasteners 108 as shown in Fig. 4. An external spline 110 is formed interiorly on the outside cover, and a radially inwardly facing tapered seal seat 112 is formed exteriorly thereon so that a conventional air of mating floating ring seals 114 can be individually engaged with the seal seats 112 and 68 and with each other to exclude dirt and retain lubricant within the enclosed compartment 63 of the hollow frame. The outside cover 104 also defines a shouldered bearing seat 116 adapted to receive the outer race of a tapered roller bearing assembly 118, while the inner race thereof is engaged with the bearing seat 70 on the shaft 64. The inside cover 106 defines a seal seat 120 like that of the outside cover so that a conventional pair of floating ring seals 122 can be engaged with the seal seat 120 and seal seat 84. A shouldered bearing seat 124 is defined within the inside cover to receive the outer race of a second tapered roller bearing assembly 126 while the inner race thereof is engaged with the bearing seat 86 on the hub 81.

Referring next to Fig. 3, the gear train 62 is driven by a hydraulic drive motor 128 releasably secured to the inner side wall 98 in a cantilevered fashion. This drive motor can be of almost any construction, but preferably is a fixed displacement hydraulic motor driven by a variable displacement pump, not shown, in a well known manner. The drive motor has an output shaft 130 adapted to be releasably received within an input gear 132. The input gear is supported for rotation about an input axis 133 by laterally, spaced roller bearing assemblies 134 and 136 in the side walls 98 and 96 through intermediate annular bearing cages 138 and 140 respectively. The input gear has an outer splined extension 142 adapted to be selectively coupled to the hollow frame 60 by a spring engaged and hydraulically released disc brake assembly 144 of the usual type so that it need not be described in detail. The input year is intermeshed with an idler gear 146 rotatably mounted on a roller bearing assembly 148. This roller bearing assembly is supported on a shaft 150 connected to the outer side wall 96 and contained axially by a cap 152 mounted on the inner end of the shaft and connected to the inner side wall 98. Advantageously, the inner cage 138 retains the cap 152 axially in place while the outer cage 140 axially retains the shaft 150.

Referring now to Figs. 4 and 5, the gear train 62 also includes a cluster gear 154 having an outboard larger diameter gear 156 driven by the idler gear 146 and an inboard smaller diameter gear 158 releasably connected together by a spline joint 160. The outer and inner side walls 96 and 98 are disposed in generally closely spaced parallel relation in the region of the annular gap 46 and immediately exteriorly of the wheel assembly 26 as is shown by the relatively narrow necked portion 161 of the hollow frame 60 as shown best in Fig. 6. However, the outer and inner side wall 96 and 98 are contoured to be axially spread apart radially inwardly of the outer and inner wheel flanges 59 and 55 to form an enlarged head portion or enlarged housing 163 with the peripheral wall 100 as can be appreciated by reference to Fig. 6. When viewing Fig. 4, for example, note that the contoured side walls 96 and 98 and the associated covers 104 and 106 are spaced apart within the wheel assembly such that they are located immediately radially within the respective flanges 59 and 55 and substantially centrally of the axial midpoints thereof. Since the opposed tapered bearing assemblies 118 and 126 are mounted radially within these covers, the bearing assemblies ace also axially aligned with the midpoints of the flanges such that they are relatively widely spaced apart for better support of the wheel assembly. The outer side wall 96 is branched to form an inner wall extension 162, and a cylindrically stepped shaft 164 is mounted in the wall extension and in the inner side wall 98. A pair of roller bearing assemblies 166 and two tubular spacer elements 170, 172 are mounted on the shaft 164 axially between a shoulder 174 thereon and the wall extension 162, and the cluster gear 154 is rotatably mounted on these bearing assemblies. The shaft 164 is retained in place by the inside cover 106.

The gear train 62 further includes a second cluster gear 176 having an inboard larger diameter gear 178 driven by the smaller diameter gear 158 of the first cluster gear 154 and an outboard smaller diameter sun gear 180. For manufacturing and economical reasons the second cluster gear has a central hub 182 releasably connected to the larger gear 178 by a plurality of fasteners 184, and rotatably supported by a roller nearing assembly 186 mounted on the bearing seat 74 of the axle shaft 64. In turn, the hub is releasably connected to the elongate, tubular smaller gear 180 by a coupling spline joint 188.

Lastly, the gear train 62 includes a planetary gear set 190 driven by the smaller sun gear 180. A plurality of planet gears 192 are rotatably mounted on a planet carrier 194 having an internal spline 196 for intermeshing engagement with the external spline 72 of the axle shaft 64. The planet gears intermesh with the sun gear 180 and a ring gear 198, and the ring gear is nonrotatably coupled to the external spline 110 on the outside cover 104. Note is made that the ring gear is adapted to limitedly float axially between the inner wall extension 162 and the outer side wall 96 since it is trapped therebetween, and that the sun gear 180 is adapted to limitedly float radially within the planet years 192 since there is no nearing assembly radially between the sun gear and the axle shaft at the outer end thereof. This contributes to better load distribution within the teeth of the gears of the planetary gear set.

## Industrial Applicability

In operation, the hydraulic drive motor 128 can drive the input gear 132 shown in Fig. 3 at any speed within a preselected speed range. Preferably, the gear train 62 driven by the motor 128 has at least two stages of speed reduction gearing located radially within the envelope 44 of the wheel assembly 26. The various stages of speed reduction from the drive motor and the input gear to the axle shaft 64 can best be appreciated by going through the power path of the gear train 62 by assuming the following numbers of gear teeth for the designated gears :

    input gear 132 : 24 teeth
    idler gear 146 : 56 teeth
    large gear 156 : 57 teeth
    small gear 158 : 24 teeth

    large gear 178 : 86 teeth
    sun gear 180 : 30 teeth
    Ring gear 198 : 84 teeth

If the input gear 132 is rotated at 3,000 r.p.m. then the idler gear 146 will rotate at (24/56) (3,000) or 1286 r.q.m. for a first stage of speed reduction. The idler gear will rotate the first cluster gear 154 at about this same speed, or at (56/57) (1,286) or 1,263 r.p.m. and can be disregarded as a stage for this particular embodiment. The second significant stage of speed reduction is between the small gear 158 of the first cluster gear and the large gear 178 of the second cluster gear. Specifically, the large gear 178 will be rotated at (24/86) (1,263) or 352.5 r.p.m. The sun gear 180 is driven at that speed, and with the ring gear 198 held stationary as a reaction the planet carrier 194 and axle shaft 64 are driven at (352.5)-(84/30 + 1) or at 92.8 r.p.m. for a third stage of speed reduction. This gives an overall speed reduction ratio of about 32.3 : 1. The gears of the gear train 62 can be sized, however, to provide a range of reductions from about 20: 1 to about 40 : 1 rather conveniently.

It can be appreciated with reference to Fig. 3 that the inner and outer side portions 52, 54 of the wheel assembly 26, and the inner and outer side walls 98, 96 are arranged at the laterally opposite sides of the verticle mid-plane 58 in a generally symmetrical manner. Thus, relatively high tension loads on the drive belt 28 are transferred through the desirably widely laterally spaced roller bearing assemblies 126 and 118 into the respective covers 106 and 104. From the covers, these loads or forces are transmitted in a balanced symmetrical manner to the inner and outer side walls and generally longitudinally and forwardly into the roller frame 30 shown in Fig. 1. Such symmetrical and centered transferring of forces from the drive belt reduces the deflections of the hollow frame 60 in use and allows smaller or lighter members thereof.

It is evident that the entire gear train 62 is compactly contained within the enclosed compartment 63 between the side walls 96 and 98 of the hollow frame 60 and generally adjacent the mid-plane 58. In other words, no portion of the supporting hollow frame reaches laterally beyond either the inner or outer side portions 52 and 54 of the wheel assembly 26 so that the overall width of the final drive mechanism 50 is minimized. Note that only two narrow and longitudinally connected gears 132 and 146 are required to transfer power from the drive motor 128 through the relatively narrow neck portion 161 of the hollow frame 60. The wet disc brake assembly 144 is located along the input axis 133 laterally outwardly of the input gear 132 but within the space envelope or width of the drive belt 28 as can be noted by reference to Figs. 2 and 3. Simultaneously, the drive motor 128 is located laterally inwardly of the input gear along the input axis, but at such an elevated and forward location relative to the car body 14 that it is in a relatively protected location even though it extends laterally inwardly beyond the width of the drive belt.

It is contemplated that the final drive mechanism 50 of the present invention is capable of rotatably driving a number of conventional multi-jointed metal track chains as well as the endless elastomeric drive belt 28 illustrated. Accordingly, by the terms drive belt or belted vehicle as used herein, it is meant to include a vehicle having any belt or track chain that is formed into a closed loop and entrained about a substantial portion of the periphery of the wheel side portions 52 and 54. In this regard, the periphery of each side portion could be provided with drive teeth such as those on conventional sprockets, although not shown, to more positively engage the drive belt. In every case, however, there is a radially inwardly directed torque path to the wheel assembly and essentially split torque paths directed radially outwardly through the side portions to drive the belt at two transversely displaced locations.

We also contemplate replacing the hydraulic drive motor 128 with a coupling joint so that the input gear 132 can be driven by a drive shaft emanating from a wide variety of mechanical transmissions without departing from Scope of the present invention as defined in the appended claims.

## Claims

1. A final drive mechanism (50) for a vehicle (10) including a wheel assembly (26) having an axially inner side portion (52) and a generally cylindrical flange (55) connected thereto, an outer side portion (54) and a generally cylindrical flange connected thereto, and a shaft assembly (56) connecting the side portions (52, 54) and defining a substantially cylindrical envelope (44) and a relatively narrow annular peripheral gap (46) between the flanges (55, 59), and a hollow frame (60) for rotatably supporting the wheel assembly (26) by extending solely radially inwardly between the flanges (55, 59) through the gap (46),

the hollow frame (60) includes a relatively narrow neck portion (161) and an enlarged head portion (163) located within the wheel assembly (26) ; and

a gear train (62) is provided for powerably rotating the wheel assembly (26) including a plurality of interconnected gears (156, 158, 178, 180, 192, 198) located within the hollow frame (60), characterized in that : said gear train (62) comprises at least two speed reduction gear sets (154, 176, 190) located within the enlarged head portion (163), and in that one of the reduction gear sets includes a planetary gear set (190) having a ring gear (198) non rotatably connected to the hollow frame (60), a planetary carrier (194) coupled to rotate with the shaft assembly (56) adapted to drive the wheel assembly (26) and a sun gear (180) driven by a second speed reduction gear set arranged to transmit torque through said narrow annular peripheral gap (46).

2. The final drive mechanism (50) of claim 1 wehrein the shaft assembly (56) includes an axle shaft (64).

3. The final drive mechanism (50) of claim 2 wherein the gear train (62) includes a cluster gear (176) located generally within the enlarged head portion (163) and defining a relatively small diameter sun gear (180) for forming a part of and driving the planetary gear set (190) and a relatively large diameter gear (178).

4. The final drive mechanism (50) of claim 3 wherein the gear train (62) includes another cluster gear (154) located generally within the enlarged head portion (163) and defining a relatively small diameter gear (158) connected to the large diameter gear (178) of the cluster gear and a driven relatively large diameter gear (156).

5. The final drive mechanism (50) of claim 1 wherein the gear train (62) includes first and second interconnected cluster gears (154, 176) located generally within the enlarged head portion (163) of the hollow frame (60).

6. The final drive mechanism (50) of claim 5 wherein a vertical, longitudinal mid-plane (58) is defined generally centrally of the annular peripheral gap (46) and the first cluster gear (154) includes a relatively large diameter gear (156) located substantially on the mid-plane (58).

7. The final drive mechanism (50) of claim 6 wherein the first cluster gear (154) includes a relatively small diameter gear (158) and the second cluster gear (176) includes a relatively large diameter gear (178) intermeshingly engaged with the relatively small diameter gear (158).

8. The final drive mechanism (50) of claim 7 wherein the second cluster gear (176) includes a relatively small diameter gear (180) and the second cluster gear (176) is rotatably mounted on the shaft assembly (56).

9. The final drive mechanism (50) of claim 5 wherein the second cluster gear (176) defines a sun gear (180) intermeshing with the planet gears (192).

10. The final drive mechanism (50) of claim 1 wherein the ring gear (198) is nonrotatably connected to the hollow frame (60) with limited movement to float.

11. The final drive mechanism (50) of claim 1 wherein the gear train (62) includes a cluster gear (176) defining the gun gear (180) and a first gear (178) of larger diameter than the sun gear (180), and means (186) for rotatably mounting the cluster gear (176) within the wheel assembly (26) so that the sun gear (180) can limitedly float in the radial direction.

12. The final drive assembly (50) of claim 11 wherein the gear train (62) includes another cluster gear (154) defining a second gear (158) intermeshing with the first gear (178) and a third gear (156) of larger diameter than the second gear (158), the third gear (156) being located generally on a vertical and longitudinally extending mid-plane (58) passing through the gap (46).

## Ansprüche

1. Endantriebsmechanismus (50) für ein Fahrzeug (10) mit einer Radanordnung (26) mit einem axial inneren Seitenteil (52) und einem damit verbundenen, im ganzen zylindrischen Flansch (55), einem Außenseitenteil (54) und einem im ganzen zylindrischen damit verbundenen Flansch (59) und mit einer Wellenanordnung (56), welche die Seitenteile (52, 54) verbindet und eine im wesentlichen zylindrische Umhüllung (44) und einen relativ schmalen ringförmigen Umfangsspalt (46) zwischen den Flanschen (55, 59) definiert und ferner mit einem hohlen Rahmen (60) zur drehbaren Lagerung der Radanordnung (26) durch allein ein radial nach innen Erstrecken zwischen den Flanschen (55, 59) durch den Spalt (46), wobei der hohle Rahmen (60) einen relativ schmalen Halsteil (161) aufweist und einen verbreiterten Kopfteil (163) angeordnet innerhalb der Radanordnung (26), und ferner mit einer Getriebekette (62) vorgesehen zum leistungsmäßigen Drehen der Radanordnung (26) einschließlich einer Vielzahl von in Verbindung stehenden Zahnrädern (156, 158, 178, 180, 192, 198) angeordnet innerhalb des hohlen Rahmens (60), dadurch gekennzeichnet, daß die Getriebekette (62) mindestens zwei Drehzahlverminderungsgetriebesätze (154, 176, 190) angeordnet innerhalb des verbreiterten Kopfteils (163) aufweist und daß einer der Reduktionsgetriebesätze einen Planetengetriebesatz (190) aufweist mit einem mit dem hohlen Rahmen (60) drehbar verbundenen Ringzahnrad (198), einem Planetenträger (194) gekuppelt zur Drehung mit der Wellenanordnung (56), geeignet zum Antrieb der Radanordnung (26) und einen Sonnenrad (180) angetrieben durch einen zweiten Drehzahlverminderungsgetriebesatz, angeordnet zur Übertragung von Drehmoment durch den schmalen ringförmigen Umfangsspalt (46).

2. Endantriebsmechanismus (50) nach Anpruch 1, wobei die Wellenanordnung (56) eine Achswelle (64) aufweist.

3. Endantriebsmechanismus (50) nach Anspruch 2, wobei die Getriebekette (62) einen Zahnradblock (176) aufweist, angeordnet im allgemeinen innerhalb des verbreiterten Kopfteils (163) und ein einen relativ kleinen Durchmesser besitzendes Sonnenzahnrad (180) definierend zur Bildung eines Teils von und zum Antrieb des Planetenzahnradsatzes (190) und eines einen relativ großen Durchmesser aufweisendes Zahnrad (178).

4. Endantriebsmechanismus (50) nach Anspruch 3, wobei die Getriebekette (62) einen weiteren Zahnradblock (154) aufweist, der im ganzen innerhalb des verbreiterten Kopfteils (163) angeordnet ist, und folgendes definiert:
ein einen relativ kleinen Durchmesser besitzendes Zahnrad (158) verbunden mit dem einen großen Durchmesser besitzenden Zahnrad (178) des Zahnradblocks und ein angetriebenes, einen relativ großen Durchmesser besitzendes Zahnrad (156).

5. Endantriebsmechanismus (50) nach Anspruch 1, wobei die Getriebekette (62) erste und zweite miteinander verbundene Zahnradblöcke (154, 176) aufweist, die im ganzen innerhalb des verbreiteten Kopfteils (163) des hohlen Rahmens (60) angeordnet sind.

6. Endantriebsmechanismus (50) nach Anspruch 5, wobei eine vertikale, longitudinale Mittelebene (58) defininert wird im ganzen mittig zum ringförmigen Umfangsspalt (46), wobei der erste Zahnradblock (154) ein einen relativ großen Durchmesser aufweisendes Zahnrad (156) aufweist, angeordnet im wesentlichen auf der Mittelebene (58).

7. Endantriebsmechanismus (50) nach Anspruch 6, wobei der erste Zahnradblock (154) ein einen relativ kleinen Durchmesser besitzendes Zahnrad (158) aufweist und wobei der zweite Zylinderblock (176) ein einen relativ großen Durchmesser aufweisendes Zahnrad (178) aufweist und zwar in Eingriff stehend mit dem einen relativ kleinen Durchmesser besitzenden Zahnrad (158).

8. Endantriebsmechanismus (50) nach Anspruch 7, wobei der zweite Zahnradblock (176) ein Zahnrad (180) mit relativ kleinem Durchmesser aufweist und der zweite Zahnradblock (176) drehbar auf der Wellenanordnung (56) gelagert ist.

9. Endantriebsmechanismus (50) nach Anspruch 5, wobei der zweite Zahnradblock (176) ein Sonnenzahnrad (180), in Eingriff stehend mit den Planetenzahnrädern (192) definiert.

10. Endantriebsmechanismus (50) nach Anspruch 1, wobei das Ringzahnrad (198) nicht drehbar mit dem hohlen Rahmen (60) mit begrenzter Schwimmbewegung verbunden ist.

11. Endantriebsmechanismus (50) nach Anspruch 1, wobei die Getriebekette (62) einen Zahnradblock (176) aufweist, der das Sonnenzahnrad (180) definiert und ein erstes Zahnrad (178) von größerem Durchmesser als das Sonnenzahnrad (180) und mit Mitteln (186) zur drehbaren Anordnung des Zahnradblocks (176) innerhalb der Radanordnung (26) derart, daß das Sonnenzahnrad (180) in begrenzter Weise in Radialrichtung schwimmen kann.

12. Endantriebsanordnung (50) nach Anspruch 11, wobei die Getriebekette (62) einen weiteren Zahnradblock (154) aufweist, der ein zweites Zahnrad (158) definiert, und zwar in Eingriff stehend mit dem ersten Zahnrad (178) und ferner mit einem dritten Zahnrad (156) mit einem größerem Durchmesser als das zweite Zahnrad (158), wobei das dritte Zahnrad (156) im allgemeinen auf einer vertikalen und sich längs erstrekkenden Mittelebene (158) angeordnet ist, die durch den Spalt (46) verläuft.

## Revendications

1. Mécanisme de transmission finale (50) pour un véhicule (10), comportant un ensemble formant roue (26) pourvu d'une partie latérale (52) située à l'intérieur axialement et d'un rebord, dans l'ensemble, cylindrique (55) relié à celle-ci, d'une partie latérale extérieure (54) et d'un rebord, dans l'ensemble, cylindrique (59) relié à celle-ci, un ensemble formant arbre (56) accouplant les parties latérales (52, 54) et définissant une enveloppe sensiblement cylindrique (44) et un espace périphérique annulaire, relativement étroit (46) entre les rebords (55, 59), et une armature creuse (60) destinée à supporter d'une manière mobile en rotation l'ensemble formant roue (26) en s'étendant uniquement radialement vers l'intérieur entre les rebords (55, 54) à travers l'espace (46), l'armature creuse (60) comprenant une partie formant col relativement étroite (161) et une partie formant tête élargie (163) située à l'intérieur de l'ensemble formant roue (26) ; tandis qu'il est prévu, pour faire tourner d'une manière commandée l'ensemble formant roue (26), un système d'engrenages (62) étant plusieurs pignons engrenés mutuellement (156, 158, 178, 180, 192, 198) situés à l'intérieur de l'armature creuse (60), caractérisé en ce que ledit système d'engrenages (62) comprend au moins deux jeux d'engrenages réducteurs de vitesse (154, 176, 190) situés à l'intérieur de la partie formant tête élargie (163), et en ce que l'un des jeux d'engrenages réducteurs comporte un jeu d'engrenages planétaires (190) muni d'une couronne dentée (198) accouplée d'une manière non rotative avec l'armature creuse (60), d'un porte-pignons satellites (194) accouplé pour tourner avec l'ensemble formant arbre (56) adapté pour entraîner l'ensemble formant roue (26), et d'un pignon solaire (180) entraîné par un second jeu d'engrenages réducteurs de vitesse, conçu pour transmettre un couple à travers ledit espace périphérique annulaire, étroit (46).

2. Mécanisme de transmission finale (50) selon la revendication 1, dans lequel l'ensemble formant arbre (56) comporte un arbre de transmission (64).

3. Mécanisme de transmission finale (50) selon la revendication 2, dans lequel le système d'engrenages (62) comporte un train d'engrenages (176) situé, d'une manière générale, à l'intérieur de la partie formant tête élargie (163) et définissant un pignon solaire à diamètre relativement petit (180), destiné à faire partie du jeu d'engrenages planétaires (190) et a entraîner celui-ci, et un pignon à diamètre relativement grand (178).

4. Mécanisme de transmission finale (50) selon la revendication 3, dans lequel le système d'engrenages (62) comporte un second train d'engrenages (154) situé, d'une manière générale, à l'intérieur de la partie formant tête élargie (163) et définissant un pignon à diamètre relativement petit (158), engrené avec le pignon à grand diamètre (178) du premier train d'engrenages, et un pignon mené à diamètre relativement grand (156).

5. Mécanisme de transmission finale (50) selon la revendication 1, dans lequel le système d'engrenages (62) comporte des premier et second trains d'engrenages engrenés mutuellement (154, 176) situés, d'une manière générale, à l'intérieur de la partie formant tête élargie (163) de l'armature creuse (60).

6. Mécanisme de transmission finale (50) selon la revendication 5, dans lequel un plan médian longitudinal, vertical (58) est défini, d'une manière générale, au centre de l'espace périphérique annulaire (46), le premier train d'engrenages (154) comportant un pignon à diamètre relativement grand (156) situé sensiblement sur le plan médian (58).

7. Mécanisme de transmission finale (50) selon la revendication 6, dans lequel le premier train d'engrenages (154) comporte un pignon à diamètre relativement petit (158), tandis que le second train d'engrenages (176) comporte un pignon à diamètre relativement grand (178) accouplé par un engrènement mutuel avec le pignon à diamètre relativement petit (158).

8. Mécanisme de transmission finale (50) selon la revendication 7, dans lequel le second train d'engrenages (176) comporte un pignon à diamètre relativement petit (180), et le second train d'engrenages (176) est monté mobile en rotation sur l'ensemble formant arbre (56).

9. Mécanisme de transmission finale (50) selon la revendication 5, dans lequel le second train d'engrenages (176) définit un pignon solaire (180) qui engrène mutuellement avec les pignons satellites (192).

10. Mécanisme de transmission finale (50) selon la revendication 1, dans lequel la couronne dentée (198) est accouplée d'une manière non rotative avec l'armature creuse (60) avec possibilité d'un déplacement limité pour flotter.

11. Mécanisme de transmission finale (50) selon la revendication 1, dans lequel le système d'engrenages (62) comporte un train d'engrenages (176) qui définit le pignon solaire (180) et un premier pignon (178) ayant un diamètre plus grand que le pignon solaire (180), et des moyens (186) destinés au montage mobile en rotation du train d'engrenages (176) à l'intérieur de l'ensemble formant roue (26), de façon que le pignon solaire (180) puisse flotter d'une manière limitée dans la direction radiale.

12. Ensemble de transmision finale (50) selon la revendication 11, dans lequel le système d'engrenages (62) comporte un second train d'engrenages (154) définissant un second pignon (158) qui engrène mutuellement avec le premier pignon (178), et un troisième pignon (156) ayant un diamètre plus grand que le second pignon (158), le troisième pignon (156) étant situé, d'une manière générale, sur un plan médian vertical et s'étendant longitudinalement (58) qui traverse l'espace (46).

Fig.1.

Fig.2.

FIG_3

Fig_4

Fig_5

# Fig_6_

# Fig_7_